# EUROPÄISCHE PATENTSCHRIFT

(11) **EP 2 017 120 B1**
(45) Veröffentlichungstag und Bekanntmachung des Hinweises auf die Patenterteilung: **30.09.2015**
(21) Anmeldenummer: 08159168.7
(22) Anmeldetag: 27.06.2008
(51) Int. Cl.: B60N 2/16

(54) **Fahrzeugsitz mit einem Grundrahmen und einem gegenüber diesem Grundrahmen relativbeweglichen Sitzrahmen**
Vehicle seat with a ground frame and a seat frame which can be moved relative to this ground frame
Siège de véhicule doté d'un châssis et d'un cadre de siège tournant par rapport à ce châssis

(30) Priorität: 14.07.2007 DE 102007032897
(43) Veröffentlichungstag der Anmeldung: 21.01.2009
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- DE-A1- 3 717 703
- DE-C1- 4 025 183

## Beschreibung

Die Erfindung betrifft einen Fahrzeugsitz nach dem Oberbegriff des Anspruchs 1. Ein derartiger Fahrzeugsitz ist aus der DE 37 17 703 A1 bekannt.

Aus der DE 40 25 183 C1 ist bereits ein Fahrzeugsitz bekannt, der einen Grundrahmen sowie einen Sitzrahmen aufweist, wobei der Grundrahmen und der Sitzrahmen über ein Scherengestell verbunden sind. Bei der dort vorgeschlagenen Gestaltung ist weiter eine zwischen dem Sitzrahmen und dem Grundrahmen angeordnete Gasfeder vorgesehen, sowie eine durch ein Betätigungselement betätigbare Ventileinrichtung zur Einstellung des Druckes in der Gasfeder in Abhängigkeit vom Gewicht des Fahrers. Dort ist also eine sogenannte Gewichtseinstellungsmöglichkeit vorgesehen, bzw. eine entsprechende Einrichtung zur gewichtsabhängigen Einstellung. Weiter ist bei der Gestaltung eine Einrichtung zur Einstellung der gewünschten Sitzhöhe (Höheneinstellung) vorgesehen. Zwischen dem Sitzrahmen und dem Grundrahmen ist eine Gurtaufrollvorrichtung mit einer Kupplung vorgesehen, die wie die Gasfeder mittels einer Druckquelle mit Druckgas beaufschlagbar ist. Die Ventileinrichtung weist dort ein 3/2-Wegeventil sowie ein 2/2 Wegeventil auf. Diese beiden Wegeventile sind ebenso wie ein Mikroschalter an einem Tragorgan angeordnet, wobei die Wegeventile und der Mikroschalter Bestandteil einer Steuerungseinrichtung sind. An dem Tragorgan sind zwei Seilzüge vorgesehen. Diese beiden Seilzüge sind jeweils mit einem manuell betätigbaren Schalter, der hier insbesondere als Schwenkhebel ausgebildet ist, gekoppelt, so dass ein Verstellen bzw. Verschwenken des Schalters ein entsprechendes Schwenken des Tragorgans auslöst. Bei der aus der DE 40 25 183 C1 bekannten Gestaltung ist ferner eine (bereits angesprochene und) mit einer Kupplung versehene und am Sitzrahmen angeordnete Gurtaufrollvorrichtung vorgesehen. Diese Gurtaufrollvorrichtung weist einen Gurt auf, der einerseits an dieser Gurtaufrollvorrichtung festgelegt ist, und andererseits an dem Grundrahmen festgelegt ist. Weiter ist eine bzw. sind zwei Kurvenscheiben vorgesehen, die an der Gurtaufrollvorrichtung angeordnet sind. Über Taster sind das 2/2-Wegeventil bzw. der Mikroschalter von der Kurvenscheibe ansteuerbar bzw. umgekehrt. Sofern mittels des manuellen Betätigungselements über die Seilzüge ein Verschwenken des Tragorgans bewirkt wird, wird durch das Zusammenwirken der Taststifte mit der Kurvenscheibe - je nach Betätigung - ein Verstellen des 2/2-Wegeventils bzw. des Mikroschalters bewirkt. Weiter ist ein Kompressor vorgesehen, der motorisch antreibbar ist und fluidisch mit der Gasfeder verbunden ist. Die bereits angesprochene Kupplung der Gurtaufrollvorrichtung kann mittels des 3/2-Wegeventils mit Druckgas zur Betätigung beaufschlagt werden.

Sofern nun der Sitz in seiner Höhe (nach oben) verstellt werden soll, das heißt der Sitzrahmen in Bezug auf den Grundrahmen hoch gehoben werden soll, so wird ein manuell betätigbares Betätigungselement hochgezogen. Das Betätigungselement ist um eine Achse verschwenkbar, so dass beim Hochziehen des Betätigungselements der eine Seilzug aus einer Hülse herausgezogen wird. Dadurch wird der Seilzug so bewegt, dass die Steuerungseinrichtung um eine Schwenkachse derart verschwenkt wird, dass mit Hilfe der Kurvenscheibe über das Tastorgan der Mikroschalter betätigt bzw. geschlossen wird. In dieser geschlossenen Stellung des Mikroschalters wird der Antriebsmotor bestromt, so dass der Kompressor mit Hilfe des Antriebsmotors entsprechend angesteuert wird. Dadurch wird mittels des eine Druckquelle bildenden Kompressors die Gasfeder mit Druckgas beaufschlagt, so dass der Sitzrahmen entsprechend angehoben wird.

Sofern der Sitzrahmen in Bezug auf den Grundrahmen abgesenkt werden soll, wird das Betätigungselement nach unten gedrückt, und zwar durch Schwenken um eine entsprechende Achse. Dadurch wird der zweite Seilzug in Bezug auf seine Seilzughülse verlängert. Dies wiederum bewirkt eine Betätigung der Steuerungseinrichtung entsprechend einer Schwenkbewegung derselben um eine Schwenkachse, und zwar entgegen der oben angesprochenen Schwenkrichtung. Hierdurch wird wiederum bewirkt, dass das Tastorgan des 2/2-Wegeventils an der Kurvenscheibe anliegt, und das 2/2-Wegeventil relativ zu dieser in seine Stellung verlagert wird. Dies erfolgt so, dass zwischen der Gasfeder und einer Entlüftung eine fluidische Verbindung bewirkt wird, so dass Druckgas aus der Gasfeder entweichen kann, was ein Absenken des Sitzrahmens in Bezug auf den Grundrahmen hervorruft.

Die Aktivierung der Gewichtseinstellung des Fahrzeugsitzes bzw. Fahrersitzes kann entweder durch Ziehen oder Drücken des Betätigungselements erfolgen. Dabei wird mittels des Seilzugs sowohl der Mi-kroschalter als auch das 2/2-Wegeventil verstellt und mittels eines Rasthebels so lange in der entsprechenden Stellung gehalten, bis nach Erreichen der statischen Mittellage des Sitzrahmens in Bezug auf den Grundrahmen der Rasthebel mittels des an der Gurtaufrollvorrichtung vorgesehenen Entriegelungsgliedes aus einer Öffnung des Tragorgans herausdrückt und somit freigegeben wird. In der freigegebenen Stellung des Rasthebels ist es einem Federelement, das vorgesehen ist, möglich, die Steuerungseinrichtung mit dem 2/2-Wegeventil und dem Mikroschalter in eine passive Betriebsstellung zu verschieben.

Sowohl bei der Betätigung der Steuereinrichtung zum Hochheben des Sitzrahmens als auch bei der Betätigung der Steuereinrichtung zum Absenken des Sitzrahmens wird das 3/2-Wegeventil betätigt. Dadurch wird durch das 3/2-Wegeventil bei jeder Betätigung des Betätigungselements zwischen dem Kompressor und der Gurtaufrollvorrichtung bzw. der an der Gurtaufrollvorrichtung vorgesehenen Kupplung die fluidische Verbindung hergestellt und die Kupplung mit Druckgas aus dem Kompressor beaufschlagt.

Die Ventile sowie der Mikroschalter sind bei bislang bekannten Gestaltungen der vorbekannten Art typischer Weise relativ nah an den Bauteilen bzw. den verbleibenden Bauteilen der Niveau-Regulierung bzw. Niveau-Steuerung bzw. gewichtsabhängigen Höhenregulierung angeordnet. Die genannten Bauteile bzw. die genannten Ventile bzw. der genannte Mikroschalter ist bei den Gestaltungen der bekannten Art derart im Sitz integriert, dass er von außen relativ schwer zugänglich ist. Um dennoch aber eine manuelle Betätigung zu ermöglichen, wird nun bei Gestaltungen der bekannten Art ein manuell betätigbares Betätigungselement an einer gut zugänglichen Stelle angeordnet und über Seil- bzw. Bowdenzüge so mit den genannten Bauteilen bzw. Ventilen oder dem Schalter in Wirkverbindung gebracht, dass aus der Entfernung eine Betätigung der Ventile bzw. des Schalters möglich ist.

Der Erfindung liegt nun die Aufgabe zugrunde, den Komfort bei einem verstellbaren Fahrzeugsitz zu erhöhen, insbesondere eine optimale Federung zu erreichen.

Erfindungsgemäß wird ein Fahrzeugsitz gemäß Anspruch 1 vorgeschlagen. Bevorzugte Weiterbildungen sind Gegenstand der Unteransprüche.

Erfindungsgemäß wird also insbesondere ein Fahrzeugsitz vorgeschlagen, der einen Grundrahmen sowie einen gegenüber diesem Grundrahmen relativverstellbaren bzw. relativbeweglichen Sitzrahmen aufweist. Dabei ist vorgesehen, dass zwischen diesem Grundrahmen und diesem Sitzrahmen zumindest eine Gasfeder wirkt. Dies kann beispielsweise so sein, dass die Gasfeder mit dem Grundrahmen und mit dem Sitzrahmen gekoppelt ist. Beispielsweise kann aber auch vorgesehen sein, dass die Gasfeder mit dem Sitzrahmen und mit einem Fahrzeugboden eines Fahrzeuges, in welchem der Fahrzeugsitz angeordnet sein kann, gekoppelt ist, wobei der Grundrahmen gegenüber diesem Fahrzeugboden ebenfalls festgesetzt ist. In einer besonders vorteilhaften Ausgestaltung ist der Grundrahmen mit dem Sitzrahmen über ein Scherengestell gekoppelt. Ein derartiges Scherengestell kann insbesondere aus ein, zwei oder mehreren Strebenpaaren gebildet werden, wobei jede Strebe eines jeden Strebenpaares an die zugehörige Strebe desselben Strebenpaares an einer zwischen ihren Enden gelegenen Stelle angekoppelt ist. Beispielsweise kann vorgesehen sein, dass die jeweils einander zugeordneten Streben eines Strebenpaares im Wesentlichen in der Mitte oder in der Nähe ihrer Mitte aneinander angelenkt sind. Insbesondere bei einer derartigen Gestaltung mit einem Scherengestell kann auch vorgesehen sein, dass die angesprochene Gasfeder zwischen dem Sitzrahmen und einer Strebe des Scherengestells oder zwischen dem Grundrahmen oder einem Fahrzeugboden einerseits, und einer Strebe des Scherengestells andererseits, angeordnet ist. Weiter ist zumindest eine Druckquelle vorgesehen, die beispielsweise von einem Kompressor gebildet sein kann. Überdies ist wenigstens eine mit dieser wenigstens einen Druckquelle in Fluidverbindung bestehende Ventileinrichtung vorgesehen. Die Fluidverbindung kann dabei so sein, dass sie dauerhaft zur Druckquelle gegeben ist, und zwar beispielsweise in Form einer frei von weiteren Ventilen bestehenden Leitung. Es kann aber auch vorgesehen sein, dass in dieser Fluidverbindung weitere Ventile oder dergleichen vorgesehen sind, welche bewirken, dass die Fluidverbindung unterbrechbar ist.

Überdies ist ein manuell betätigbares Betätigungselement für die Verstellung des Fahrzeugsitzes vorgesehen. Dieses manuell betätigbare Betätigungselement ist in vorteilhafter Ausgestaltung schwenkbar angeordnet. Das manuell betätigbare Betätigungselement kann beispielsweise ein Taster oder ein Schwenkhebel oder ein Drehknauf sein.

Es ist vorgesehen, dass die wenigstens eine Ventileinrichtung an oder in dem Betätigungselement angeordnet ist.

Weiter ist vorgesehen, dass eine Niveau- bzw. Gewichtseinstellung bei jedem Fahrzeugneustart vorgenommen wird. Zu diesem Zweck ist eine entsprechende Kopplung mit der Zündung gegeben, so dass durch "Zündung ein" oder durch "Zündung aus" eine entsprechende Niveau- bzw. Gewichtseinstellung automatisch bewirkt wird. Der Fahrzeugsitz ist also so ausgebildet, dass er eine Signalverbindungsschnittstelle aufweist, über welche eine Signalverbindung mit dem Zustand und / oder Zustandswechsel der Zündung erzeugbar ist, wobei beim Schalten von "Zündung aus" auf "Zündung ein" ein Signal über diese Schnittstelle den Zustandswechsel "aus / ein" anzeigt. Dabei ist vorgesehen, dass durch dieses Signal automatisch eine Niveau- bzw. Gewichtseinstellung ausgelöst wird.

Es kann beispielsweise vorgesehen sein, dass zwei Ventile vorgesehen sind. Beispielsweise kann vorgesehen sein, dass ein 2/2-Wegeventil vorgesehen ist und ein 3/2-Wegeventil vorgesehen ist. Bei einer solchen Gestaltung kann beispielsweise vorgesehen sein, dass diese beiden Ventile bzw. dieses 2/2-Wegeventil und dieses 3/2-Wegeventil an oder in dem Betätigungselement vorgesehen sind.

Es kann insbesondere vorgesehen sein, dass eine Sitzhöhenverstelleinrichtung vorgesehen ist, durch welche der Sitzrahmen gegenüber dem Grundrahmen zur Verstellung der Sitzhöhe verlagerbar ist. Diese Sitzhöhenverstelleinrichtung ist insbesondere manuell einstellbar, und zwar insbesondere durch manuelle Betätigung des angesprochenen Betätigungselements. Ferner ist insbesondere vorgesehen, dass eine Einrichtung zur Einstellung des Gasdrucks in der Gasfeder in Abhängigkeit des Gewichts einer auf dem Fahrzeugsitz sitzenden Person vorgesehen ist. Eine solche Einstelleinrichtung kann insbesondere so sein, dass die - insbesondere bei einer schwingungsfreien Ruhelage gegebene - Sitzposition in Abhängigkeit des Fahrergewichtes so einstellbar ist, dass die Sitzhöhe bei unterschiedlichen Fahrergewichten im Wesentlichen jeweils gleich ist und / oder ein vorbestimmter (Mindest-) negativer Restfederweg verbleibt.

Es kann vorgesehen sein, dass diese Einrichtung zur Einstellung des Gasdrucks in der Gasfeder in Abhängigkeit des Fahrergewichts - diese Einrichtung wird auch als Gewichts- oder Niveausteuerung bezeichnet - automatisch ausgebildet ist, das heißt, dass eine Anpassung an ein verändertes Fahrergewicht automatisch vorgenommen wird, ohne dass es einer besonderen Betätigung auf manuelle Weise bedarf. Es kann auch - alternativ oder ergänzend - vorgesehen sein, dass durch manuelle Initiierung der Druck in der Gasfeder entsprechend dem Fahrergewicht an ein verändertes Fahrergewicht anpassbar bzw. entsprechend einstellbar ist bzw. der Sitz auf eine vorbestimmte Höhe verbracht wird und / oder so eingestellt wird, dass ein vorbestimmter Mindest-(negativer)-Restfederweg verbleibt.

In einer besonders zu bevorzugenden Ausgestaltung ist vorgesehen, dass ein Mikroschalter vorgesehen ist. Weiter kann eine Gurtaufrollvorrichtung vorgesehen sein, die beispielsweise so ist, wie es in der DE 40 25 183 C1 offenbart ist. Es wird insbesondere auf die Funktion und Ausgestaltung der dort angesprochenen Gurtaufrollvorrichtung Bezug genommen und durch diese Bezugnahme entsprechend die Offenbarung zum Gegenstand der vorliegenden Offenbarung gemacht, wobei die entsprechenden Gestaltungen bevorzugte Ausführungsformen der vorliegenden Erfindung bilden. Anzumerken ist allerdings, dass die Bowden- bzw. Seilzüge, die in der DE 40 25 183 C1 offenbart sind, gemäß der vorliegenden Erfindung nicht gegeben sein müssen, da die vorliegende Erfindung ermöglicht, das bzw. die Ventile, insbesondere 2/2-Wegeventil und 3/2-Wegeventil und/oder Mikroschalter am bzw. im Betätigungselement unterzubringen.

In vorteilhafter Ausgestaltung ist ferner vorgesehen, dass die Gurtaufrollvorrichtung am Sitzrahmen angeordnet ist. Weiter kann vorgesehen sein, dass die Gurtaufrollvorrichtung eine Kupplung aufweist. Es kann vorgesehen sein, dass die Gurtaufrollvorrichtung einen Gurt aufweist, der einerseits an der Gurtaufrollvorrichtung und andererseits an dem Grundrahmen festgelegt ist. Weiter kann vorgesehen sein, dass ein 3/2- bzw. das genannte 3/2-Wegeventil vorgesehen ist, um die Kupplung der Gurtaufrollvorrichtung, die vorteilhafter Weise gegeben ist, zu betätigen, und zwar insbesondere mit Druckgas aus dem Kompressor bzw. der Druckquelle.

Weiter kann ein Motor vorgesehen sein, der für das Antreiben eines Kompressors bzw. des in vorteilhafter Gestaltung vorgesehenen Kompressors vorgesehen ist. Über entsprechende Fluidverbindungen, wie Hydraulikleitungen, kann der Kompressor mit dem Inneren der Gasfeder in Verbindung stehen.

In vorteilhafter Ausgestaltung ist vorgesehen, dass mit dem bevorzugt vorgesehenen Kompressor bzw. der Gasfeder das 2/2-Wegeventil sowie das 3/2-Wegeventil fluidisch verbunden ist.

In besonders zweckmäßiger Ausgestaltung ist vorgesehen, dass die Höhenverstelleinrichtung derart ausgebildet ist, dass durch Betätigen, insbesondere Hochziehen, des Betätigungselements zum Hochstellen des Sitzes bzw. des Sitzrahmens der Mikroschalter betätigt wird, und zwar insbesondere geschlossen wird, wobei in dieser Stellung bzw. in der geschlossenen Stellung des Mikroschalters der Antriebsmotor mit Strom versorgt wird und den Kompressor bzw. die Druckquelle derart antreibt, dass die Gasfeder mit Druckgas beaufschlagt wird.

In besonders bevorzugter Ausgestaltung ist die Höhenverstelleinrichtung ferner so ausgestaltet, dass zum Absenken des Fahrzeugsitzes bzw. des Sitzrahmens das Betätigungselement derart betätigt werden kann bzw. nach unten gedrückt werden kann, dass das 2/2-Wegeventil in eine Stellung verbracht wird, in welcher die Gasfeder mit einer Entlüftung verbunden ist bzw. entlüftet wird, so dass Druckgas aus dieser entweichen kann und ein Absenken des Sitzrahmens bewirkt wird.

Es kann vorgesehen sein, dass in dem Betätigungselement zur Betätigung des 2/2-Wegeventils bzw. des Mikroschalters - und gegebenenfalls des 3/2-Wegeventils eine Kurvenscheibe vorgesehen ist, die mit dem Betätigungselement mit verschwenkt wird oder fest angeordnet ist, wobei mit einem Verschwenken des Betätigungselements das bzw. die Ventile bzw. der Mikroschalter so verschwenkt wird, dass sie über eine fest angeordnete Kurvenscheibe entsprechend betätigt werden.

Es kann vorgesehen sein, dass das Betätigungselement mehrstufig schaltbar ist. Das Betätigungselement kann insbesondere schwenkbar angeordnet sein. Gerade auch bei einer derartigen schwenkbaren Anordnung kann vorgesehen sein, dass das Betätigungselement mehrstufig ausgebildet ist. Beispielsweise kann ausgehend von einer neutralen Lage das Betätigungselement im Urzeigersinn in zwei Stufen verschwenkt werden und im Gegenuhrzeigersinn in zwei Stufen verschwenkt werden. Dabei kann beispielsweise vorgesehen sein, dass die der Neutrallage in den beiden entgegengesetzten Drehrichtungen am nächsten liegenden Stufen zur Höhenverstellung vorgesehen sind, und die beiden der Neutrallage abgewandten weiteren Stufen in beiden Drehrichtungen für das Bewirken einer Anpassung an das Fahrergewicht bzw. zum Sicherstellen eines vorbestimmten (Mindest-)(negativer-)Restfederweges vorgesehen sind.

Es kann auch vorgesehen sein, dass bei einer erneuten Belastung des Fahrzeugsitzes und / oder bei beim Einschalten der Zündung eines Fahrzeuges, in dem der Sitz angeordnet ist, automatisch eine Anpassung des Sitzes bzw. der Sitzhöhe bzw. des Drucks in der Gasfeder in Abhängigkeit des Fahrergewichts erfolgt bzw. eine Sicherstellung eines vorbestimmten (Mindest)(negativer)Restfederwegs, wobei zusätzlich auch die angesprochene manuelle Einstellmöglichkeit gegeben sein kann. Sofern vom "Fahrergewicht" gesprochen wird, ist selbstverständlich dies so gemeint, dass das Gewicht der auf dem Sitz sitzenden Person gemeint ist, die - sofern der Sitz ein anderer Fahrzeugsitz, als der Fahrersitz ist, wie Beifahrersitz, selbstverständlich auf eine andere Person als der Fahrer sein kann.

In besonders bevorzugter Ausgestaltung ist vorgesehen, dass eine Einrichtung vorgesehen ist, die automatisch sicherstellt, dass die Sitzhöhe so eingestellt wird, dass jeweils ein vorbestimmter (negativer) Restfederweg ermöglicht wird. Dies kann so sein, das ein vorbestimmter Verstellbereich für die Sitzhöhe vorgesehen ist, und dann, wenn die Sitzhöhe so eingestellt ist, dass sie am Rand dieses Verstellbereichs ist, noch ein vorbestimmter Federweg nach oben und unten verbleibt. Anders ausgedrückt kann vorgesehen sein, dass Randbereiche des maximalen Verstellbereiches der Sitzhöhe nicht so angesteuert werden können, dass der Sitz dort in einer Ruhelage verharren kann, sondern dass vielmehr vorgesehen ist, dass der Sitz in dieser Randlage lediglich schwingend bewegt werden kann und die Sitzhöhenverstellung so ausgebildet ist, dass die dortigen im Randbereich vorgesehenen Stellungen nicht angesteuert werden können.

Es kann beispielsweise vorgesehen sein, dass ein negativer Restfederweg von 50 mm oder von 60 mm gegeben ist, wobei aber auch je nach Ausgestaltung andere Maße, wie beispielsweise ein Maß, welches zwischen 10 mm und 100 mm liegt, als negativer Restfederweg gegeben sein können. Dies kann insbesondere so sein, dass die einstellbare Sitzhöhe bzw. die einstellbare Höhe des Sitzrahmens bzw. der Verstellbereich für den Sitzrahmen durch eine unterste statische Sitzrahmenstellung und eine oberste statische Sitzrahmenstellung bestimmt ist. Der negative Federweg ist dann so vorgesehen, dass er einerseits oberhalb der obersten Sitzrahmenstellung und andererseits unterhalb der untersten Sitzrahmenstellung gegeben ist.

Es kann vorgesehen sein, dass der negative Federweg oberhalb der obersten (statischen) Sitzrahmenstellung und unterhalb der untersten (statischen) Sitzrahmenstellung gleich ist, oder dass dort verschiedene negative Restfederwege vorgesehen sind.

Um zu bewirken, dass dort dieser negative Restfederweg gegeben ist, kann beispielsweise vorgesehen sein, dass ein mitlaufender Anschlag vorgesehen ist. Ein solcher mitlaufender Anschlag kann beispielsweise am Gurt bzw. an der Gurtaufrollvorrichtung vorgesehen sein.

In vorteilhafter Ausgestaltung ist vorgesehen, dass der Federweg beispielsweise 100 mm oder 120 mm oder ein dazwischen liegender Wert ist, und in den Endlagen eingeschränkt auf 50 mm ist bzw. jeweils 50 mm ist.

Es kann vorgesehen sein, dass eine Sitzhöhenverstellung bzw. Höhenverstellung von 50 mm bis 200 mm, vorzugsweise von 70 bis 120 mm, vorzugsweise von im Wesentlichen 80 mm möglich ist.

Bei einer besonders zu bevorzugenden Ausgestaltung ist gegenüber der vorbekannten Gestaltung, insbesondere der eingangs gewürdigten vorbekannten Gestaltung, vorgesehen, dass Grundbauteile, wie Träger, Gurtband etc. beibehalten werden.

Zumindest vorteilhafte Ausgestaltungen der Erfindung ermöglichen eine prozesssichere Montage und den Entfall von Justierarbeiten. Weiter können Lieferantenbaugruppen prüffähig sein, zumindest bei vorteilhaften Ausgestaltungen. Auch die Anzahl der Bauteile kann reduziert werden. In vorteilhafter Ausgestaltung sind die Ventilfunktionen in Gehäuseteile integriert. Dies bedeutet insbesondere, dass die Funktion des 2/2-Wegeventils und/oder des 3/2-Wegeventils in Gehäuseteile integriert ist. Insbesondere kann vorgesehen sein, dass ein Gehäuseteil am Betätigungselement angeordnet ist.

Es kann auch vorgesehen sein, dass eine Bedienmöglichkeit über die Armlehne bzw. MFAL oder eine Fahrzeugkonsole ermöglicht wird. Es kann vorgesehen sein, dass das Bedienelement am Fahrersitz bzw. Fahrzeugsitz vorgesehen ist oder - wie beispielhaft oben angesprochen - beispielsweise an der Konsole oder an einer Armlehne des Fahrzeugsitzes. Anzumerken ist, dass vorgesehen sein kann, dass der negative Federweg durch einen mitlaufenden Anschlag, welcher durch einen Aufrollgurt mitbewegt wird, begrenzt ist, wie beispielsweise auf 50 mm begrenzt ist. Hiermit wird eine zu große Auslenkung (nach oben) des Federungssystems, was zu Unsicherheiten bei der Fahrzeugbedienung (z. B. Bremsvorgang, Talfahrt, etc.) führen könnte, vermieden.

Zudem kann vorgesehen sein, dass über die Funktion der Sicherstellung des negativen Restfederweges automatisch immer das Maximum an verfügbarem Federungskomfort bereitgestellt wird.

Die angesprochene Einrichtung der Einstellung in Abhängigkeit des Fahrergewichts (Niveau-Regulierung), kann insbesondere auch so sein, dass nicht eine vorbestimmte Stellung angefahren wird, sondern dass vielmehr sichergestellt wird, dass stets ein negativer Restfederweg verbleibt. Dabei kann vorgesehen sein, dass die Aktivierung der Restfederwegüberprüfung (Gewichtseinstellung) durch kurzes Betätigen des zweistufigen Handgriffs nach oben oder nach unten bis Stufe 1 erfolgt. Die "Stufe 1" entspricht vorzugsweise dem halben (maximalen Auslenk-)Weg am Griff.

Oben war angesprochen, dass in der Stufe 1 die Höheneinstellung vorgesehen sein kann. In alternativer Ausgestaltung dazu kann aber auch vorgesehen sein, dass in der Stufe 2 die angesprochene Höheneinstellung des Fahrzeugsitzes bzw. Fahrersitzes bzw. des Sitzrahmens vorgesehen ist, und in der Stufe 1 - wie zuvor angesprochen - die Aktivierung der Restfederwegüberprüfung gegeben sein kann.

Es kann vorgesehen sein, dass nach Betätigung des Betätigungselements bzw. Handgriff der Stufe 1 durch Drücken (nach unten) oder Ziehen (nach oben) die Steuerung eingerückt und verrastet wird und bei Abweichungen des Restfederwegs entweder die Funktion "Zugluft" oder "Abluft" aktiviert. Es kann vorgesehen sein, dass bei zu geringem negativem Restfederweg über ein bzw. das 2/2-Wegeventil Luft aus dem System abgeführt wird, so dass die Federung abgesenkt wird. Weiter kann vorgesehen sein, dass bei zu großem Restfederweg über einen Schalter bzw. Schließer der Kompressor aktiviert wird, so dass die Federung anhebt. Dieser Schalter ist insbesondere der angesprochene Mikroschalter, der insbesondere auch im Handgriff bzw. dem Betätigungsteil integriert oder an diesem angeordnet ist. Anzumerken ist, dass das Betätigungselement insbesondere ein Handgriff sein kann. Es kann vorgesehen sein, dass nach Erreichen des Sollwertes für den negativen Restfederweg, wie beispielsweise 50 mm oder ein von anderer Wert, die Steuerung über einen Schaltnocken deaktiviert wird, das heißt die Verrastung der Steuerung wird aufgehoben und diese über eine Zugfeder in die Ausgangslage zurückgesetzt.

Weiter kann vorgesehen sein, dass die Höhenverstellung der Federung durch Betätigen und Halten des Betätigungselements bzw. Griffs in einer Schalt- bzw. Raststufe 2 des Betätigungselements erfolgt. Hierbei kann vorgesehen sein, dass die Steuerung in Einrückposition gebracht wird, und entsprechend der angewählten Richtung entweder zusätzlich der Kompressor (nach oben) oder das 2/2-Wege-Abluftventil (nach unten) aktiviert wird.

Es kann vorgesehen sein, dass parallel dazu ein 3/2-Wegeventil betätigt wird, welches eine Kupplung für den mitlaufenden Anschlag für die Dauer der Betätigung des Handgriffs bzw. Betätigungselements in der Stufe 2 öffnet.

Es kann vorgesehen sein, dass nach Beendigung des Höhenverstellvorgangs der Gurtaufroller sofort wieder einkoppelt und diese Stellung als neue Position für den negativen Restfederweg, der beispielsweise 50 mm ist, oder ein Wert ist, der zwischen 30 und 80 mm liegt, festlegt. Es kann vorgesehen sein, dass in dem Fall, dass bei der Höhenverstellung nach unten der positive Restfederweg von beispielsweise ebenfalls 50 mm oder einem Wert zwischen 30 und 80 mm unterschritten wird, dieser nach Beendigung der Höhenverstellung automatisch korrigiert wird.

Es kann vorgesehen sein, dass der positive Restfederweg in Höheverstellung nach unten ebenfalls 50 mm oder einen Wert zwischen 30 und 80 mm beträgt, wobei bei Höheverstellung nach oben dieser entsprechend um den Wert der Höheverstellung vergrößert wird.

In vorteilhafter Ausgestaltung ist vorgesehen, dass während des Niveliervorgangs zur Sicherstellung der exakten Restfederwege ein absolutes ruhiges Sitzen zweckmäßig oder erforderlich ist.

In besonders vorteilhafter Ausgestaltung ist es vorgesehen, dass die Verbindungen bzw. Verbindungsleitungen von dem Betätigungselement bzw. Handgriff bzw. Taster zur Steuerung von einem oder mehreren Kabeln und/oder von Schläuchen gebildet werden. Es kann vorgesehen sein, dass die Eindrückfunktion magnetisch ausgebildet ist bzw. dass das 2/2-Wegeventil und/oder 3/2-Wegeventil jeweils ein Magnetventil ist. Es ist insbesondere vorgesehen, dass die Ventile und Schalter für die Höhenverstellung im Handgriff bzw. im Taster bzw. im Betätigungselement integriert sind.

Im Gegensatz zu vorbekannten Gestaltungen ist insbesondere keine Wippfunktion in der Steuerung für die Höhenverstellung vorgesehen. Es kann vorgesehen sein, dass keine Justierarbeiten notwendig sind.

Ferner kann vorgesehen sein, dass bei einem Neustart der Federung über eine Tippfunktion, insbesondere in einer Stufe 1 des Betätigungselements bzw. Handgriffs bzw. Schalters bzw. bei Luftdruck von 0 bar möglich ist bzw. durchgeführt wird. Die Erfindung ermöglicht, dass verhältnismäßig wenig Teile erforderlich sind.

Es kann vorgesehen sein, dass der Magnet des Magnetventils bzw. der Magnetventile jeweils für eine Spannung von 12 bis 48 Volt geeignet ist.

In vorteilhafter Ausgestaltung ist vorgesehen, dass der Magnet des Magnetventils mit Monoflop(-Steuerung) versehen bzw. ausgebildet ist. Monoflop kann zusätzlich zur Reduzierung der Wärmeentwicklung im Magnet dienen. Die Magnetkraft bei hohen Temperaturen kann stark reduziert sein, was bei der Berechung berücksichtigt werden kann. Auch die Einschaltdauer kann reduziert werden.

Es kann vorgesehen sein, dass ein Monoimpuls kleiner als eine Sekunde ist, und insbesondere bei "Zündung ein" oder bei Griffbetätigung.

Es kann weiter vorgesehen sein, nach einer Stromunterbrechung (z.B. nach Schalten von "Zündung aus" auf "Zündung ein") automatisch die Niveausteuerung aktiviert wird. Beispielsweise kann vorgesehen sein, dass ein Monoimpuls nach einer derartigen Stromunterbrechung zur automatischen Aktivierung der Niveausteuerung bewirkt wird.

In besonders vorteilhafter Ausgestaltung ist vorgesehen, dass durch ein - insbesondere in die Niveausteuerung integriertes - Modul, welches einen Impuls bzw. gespeicherte Energie bei Fahrzeug-Neustart (Zündung "Ein") zur Aktivierung der Steuerung über eine vorbestimmte Dauer, wie beispielsweise ca. 1 s., abgibt bei Fahrtantritt automatisch das Gewicht des Fahrers überprüft bzw. die Restfederwege im Federungssystem korrigiert. Es ist vorzugsweise vorgesehen, dass dieser Impuls nach jeder Strom- und / oder Zündungsunterbrechung erfolgt. Ein Vorteil einer derartigen Gestaltung liegt darin, dass eine Gewichtskontrolle immer automatisch erfolgt, wodurch die Restfederwege und der daraus resultierende maximale Komfort des Fahrzeugsitzes bzw. Fahrersitzes immer gewährleistet ist. Es ist insbesondere vorgesehen, dass eine weitere manuelle Einstellmöglichkeit für Höhe und Gewicht dadurch nicht eingeschränkt wird.

In vorteilhafter Ausgestaltung weist das Betätigungselement einen Griff auf, der insbesondere als Schwenkgriff ausgestaltet ist, sowie Ventilfunktionen für eine 3/2-Wegenventil und ein 2/2-Wegeventil, die vorzugsweise in einem insbesondere gemeinsamen Gehäuse angeordnet sind und mit dem Griff verbunden sind, insbesondere schwenkbar verbunden sind, einen Mikroschalter für die Niveau-Kontrolle, eine Achse, eine Schenkelfeder sowie einen Mikroschalter für "Kompressor ein", und ggf. einen Aufroller. Es kann insbesondere vorgesehen sein, dass das Betätigungselement eine Betätigungsbaugruppe ist.

Es kann insbesondere vorgesehen sein, dass die Gewichtseinstellung/Niveauregulierung automatisch bei einem Neustart des Fahrzeugs nach "Zündung ein" durch Eindrücken eines Niveauautomaten erfolgt. Dabei kann vorgesehen sein, dass dabei der negative Restfederwert von 50 (oder 60) mm überprüft wird. Es kann vorgesehen sein, dass die Gewichtseinstellung/Niveauregulierung ebenso automatisch durch Antippen des Betätigungsgriffs bzw. des Betätigungselementes bis zu einer ersten Stufe (Druckpunkt) erfolgt, und zwar beispielsweise wahlweise nach oben oder nach unten. Weiter kann vorgesehen sein, dass der Schaltvorgang dabei negativ erfolgt, das heißt, erst nach Rückstellung des Betätigungselements bzw. Betätigungsgriffs in seine Mittellage wird der Niveauautomat in seiner Arbeitsposition geschwenkt.

Weiter kann vorgesehen sein, dass der Magnet als Stellglied hierbei nur für eine Zeit von maximal einer Sekunde bestromt wird. Durch eine solche Beschaltung wird eine übermäßige Erwärmung des Magneten vermieden.

Weiter kann vorgesehen sein, dass bei einer evtl. vorliegenden Abweichung des negativen Restfederwegs zum Soll-Wert entweder der Kompressor (Position zu tief) über den Mikroschalter aktiviert wird oder ein Abluftventil (Position zu hoch) betätigt wird.

Überdies kann vorgesehen sein, dass bei Erreichen des negativen Restfederwegs (nach oben) von beispielsweise 50 oder 60 mm die Steuerung automatisch deaktiviert wird. Es kann vorgesehen sein, dass während des Niveliervorganges zur Sicherstellung der exakten Restfederwege ein absolut ruhiges Sitzen erforderlich ist. Weiter kann vorgesehen sein, dass der Niveauautomat immer beim Durchschreiten des Null-Durchgangs-/Niveau deaktiviert wird.

Es kann vorgesehen sein, dass die Höhenverstellung, die beispielsweise innerhalb eines Intervalls von 80 mm, - aber auch abweichende Werte, wie beispielsweise solche, die zwischen 50 und 150 mm oder auch abweichende, sind möglich - wird beispielsweise durch anhaltendes Ziehen (nach oben) oder Drücken (nach unten) über ein Betätigungselement bzw. Handgriff in einer Stufe 2 vorgenommen wird.

Dabei kann vorgesehen sein, dass dabei durch die Betätigung des Handgriffs bzw. des Betätigungselements in Stufe 2 über ein in ein Handgriffgehäuse integriertes 3/2-Ventil die Kupplung im Gurtaufroller gelöst und zudem über einen Mikroschalter (Griff nach oben) der Kompressor aktiviert und Luft zugeführt wird, um die Federung zu heben, oder über ein 2/2-Wegeventil (Griff nach unten) Luft abgeführt wird, um die Federung zu senken.

In einer besonders zu bevorzugenden Ausgestaltung ist vorgesehen, dass nach Erreichen der gewünschten Höhe sofort nach Loslassen des Handgriffs bzw. des Betätigungselements eine Kupplung im Gurtaufroller eingerückt wird und diese Position als neue Federungshöhe festgelegt wird.

Ferner kann vorgesehen sein, dass zugleich bei der Funktion "Höhenverstellung" immer die Funktion "Gewichtseinstellungs-/Niveauregulierung" mit ausgeführt, das heißt nach Beendigung des Höhenverstellvorgangs bzw. nach Loslassen das Handgriffs bzw. des Betätigungselements wird nachfolgend immer der negative Restfederweg überprüft. Es sei allerdings auch angemerkt, dass dies eine bevorzugte Ausgestaltung ist, die selbstverständlich auch anders sein kann, ohne dass die Erfindung verlassen wird.

Es kann vorgesehen sein, dass während des Niveliervorgangs zur Sicherstellung der exakten Restfederwege ein absolut ruhiges Sitzen erforderlich ist.

Weiterhin kann vorgesehen sein, dass der Niveauautomat immer beim Durchschreiten des Durchgangs-/Niveau deaktiviert wird.

Im Folgenden sollen Ausführungsbeispiele der Erfindung anhand der Figuren näher erläutert werden, wodurch die Erfindung allerdings nicht beschränkt werden soll. Dabei zeigen:

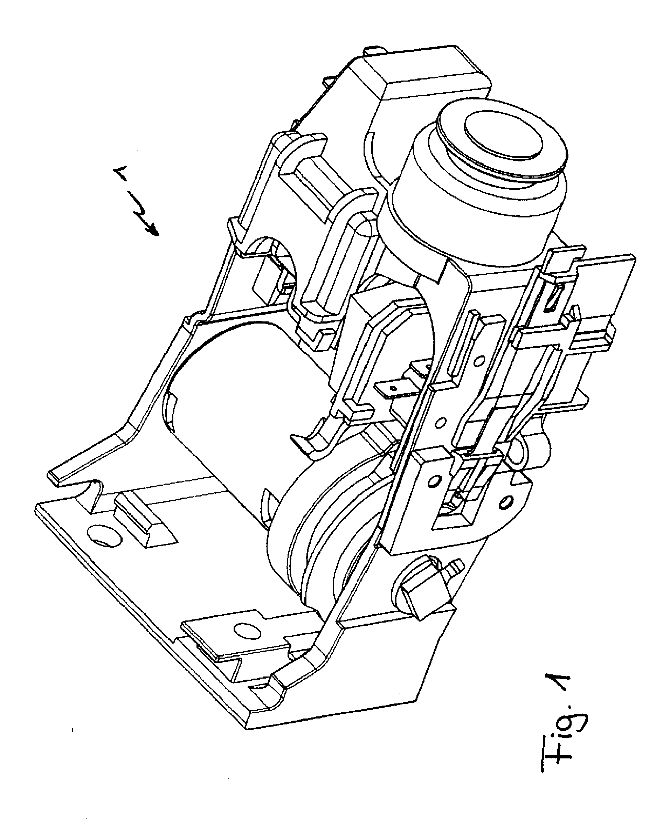

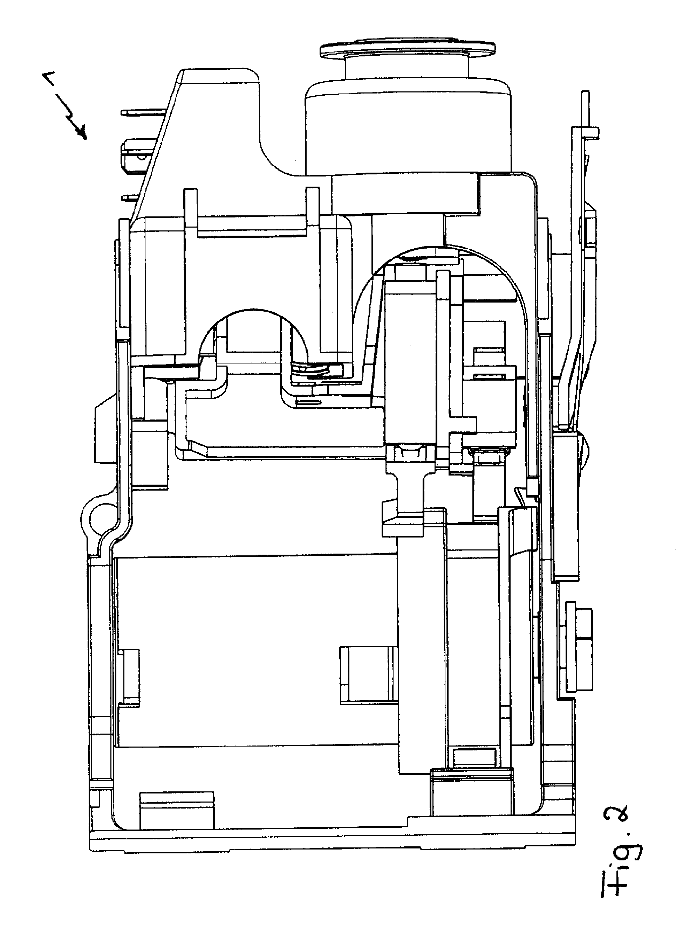

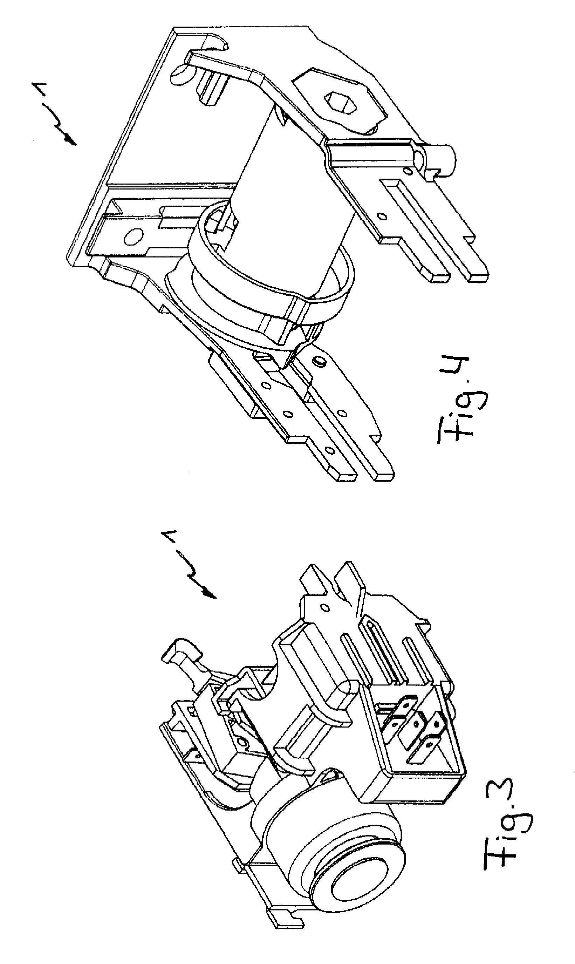

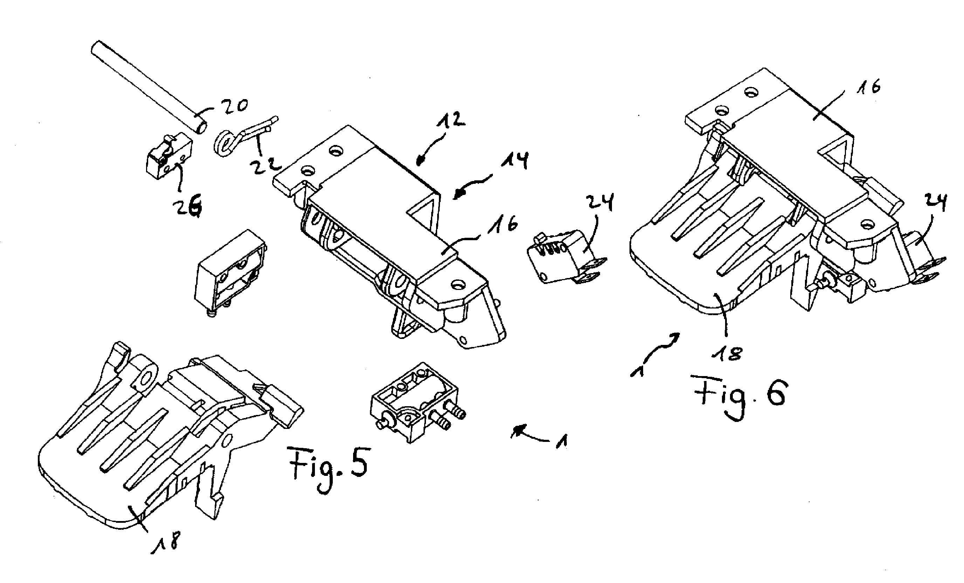

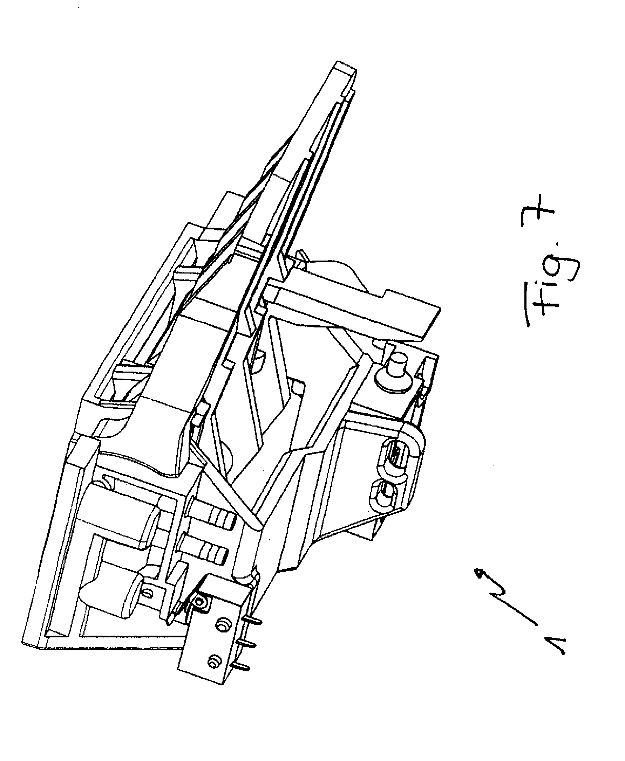

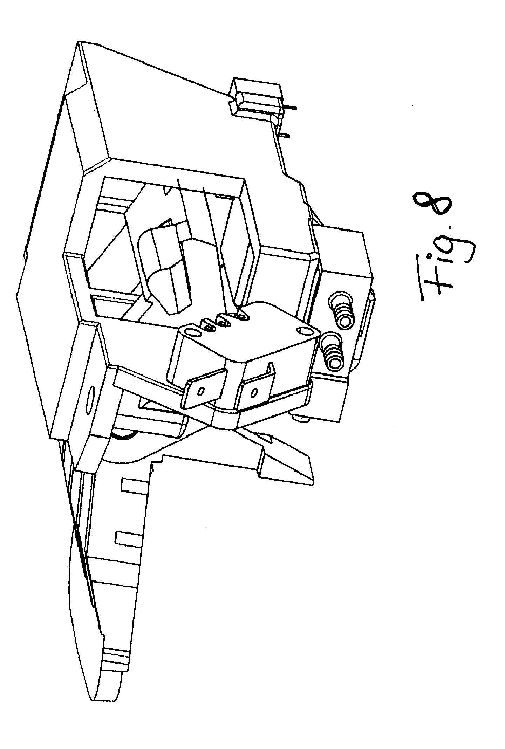

- Fig. 1 bis Fig. 7: Ausführungsbeispiele der Erfindung in schematischer Ansicht.

Die erfindungsgemäße - in den Fig. lediglich teilweise dargestellten - Fahrzeugsitz 1 weist einen nicht dargestellten Grundrahmen sowie einen ebenfalls nicht dargestellten und gegenüber dem Grundrahmen verstellbaren Sitzrahmen auf. Zwischen diesem Grundrahmen und diesem Grundrahmen wirkt eine Gasfeder, die sich am Sitzrahmen abstützt. Ferner ist eine Druckquelle vorgesehen und mehrere mit dieser Druckquelle in Fluidverbindung stehende Ventileinrichtungen 12, 14. Die Ventileinrichtung 12 ist ein 2/2-Wegeventil und die Ventileinrichtung 14 ist ein 3/2-Wegeventil. Das 2/2-Wegeventil 12 sowie das 3/2-Wegeventil 14 sind jeweils in einem Ventilgehäuse 16 integriert. Überdies ist ein Griff 18 für die Betätigung der Höhenverstellung bzw. der negativen Restfederwegkontrolle vorgesehen, der mittels einer Achse 20 schwenkbar gelagert ist, wobei von dieser Achse 20 eine Drehfeder 22 aufgenommen wird. Überdies ist ein Mikroschalter 24 für die Funktion "Kompressor ein" sowie ein Mikroschalter 26 für die Niveaukontrolle vorgesehen. Die angesprochene Feder ist insbesondere eine Schenkelfeder.

Es ist insbesondere vorgesehen, dass der Griff an das Gehäuse angelehnt ist. Das Gehäuse mit den Ventilen sowie die Mikroschalter sind folglich am Griff bzw. am Betätigungselement angeordnet bzw. Betätigungselement integriert.

### Bezugszeichenliste

- 1: Fahrzeugsitz
- 12: 2/2-Wegeventil
- 14: 3/2-Wegeventil
- 16: Ventilgehäuse
- 18: Griff
- 20: Achse
- 22: Drehfeder
- 24: Mikroschalter
- 26: Mikroschalter

## Patentansprüche

1. Fahrzeugsitz mit einem Grundrahmen sowie mit einem gegenüber dem Grundrahmen relativ verstellbaren Sitzrahmen, und mit einer zwischen diesem Grundrahmen und diesem Sitzrahmen wirkenden Gasfeder, die sich am Sitzrahmen abstützt, wobei wenigstens eine
Druckquelle und wenigstens eine mit dieser Druckquelle in Fluidverbindung stehende Ventileinrichtung (12, 14) vorgesehen ist, und dass ferner für die Verstellung des Fahrzeugsitzes ein manuell betätigbares Betätigungselement (16, 18) vorgesehen ist, wobei
diese wenigstens eine Ventileinrichtung (12, 14) am oder in dem Betätigungselement (16, 18) angeordnet ist, **dadurch gekennzeichnet, dass**
eine Schnittstelle zur Zündung eines Fahrzeuges gegeben
ist, über die ein Signal übertragbar ist, welches den Zustandswechsel von "Zündung Aus" zu "Zündung Ein" anzeigt, wobei dieses Signal eine automatische Niveau- bzw. Gewichtsregulierung
auslöst.

2. Fahrzeugsitz nach Anspruch 1,
**dadurch gekennzeichnet, dass**
eine Sitzhöhenverstelleinrichtung vorgesehen ist, durch welche der Sitzrahmen gegenüber dem Grundrahmen zur Verstellung der Sitzhöhe verlagerbar ist.

3. Fahrzeugsitz nach einem der vorangehenden Ansprüche,
**dadurch gekennzeichnet, dass**
eine Einrichtung zur Einstellung des Gasdrucks in der Gasfeder in Abhängigkeit des Gewichts einer auf dem Fahrzeugsitz sitzenden Person vorgesehen ist.

4. Fahrzeugsitz nach einem der vorangehenden Ansprüche,
**dadurch gekennzeichnet, dass**
ein Mikroschalter (24, 26) vorgesehen ist, wobei insbesondere vorgesehen ist, dass dieser Mikroschalter (24, 26) am oder in dem Betätigungselement (16, 18) angeordnet ist.

5. Fahrzeugsitz nach einem der vorangehenden Ansprüche,
**dadurch gekennzeichnet, dass**
am oder in dem Betätigungselement (16, 18) zwei Ventile (12, 14), insbesondere ein 2/2-Wegeventil (129 und ein 3/2-Wegeventil (14), angeordnet ist.

6. Fahrzeugsitz nach einem der vorangehenden Ansprüche,
**dadurch gekennzeichnet, dass**
das manuell betätigbare Betätigungselement (12, 14) ein zur Betätigung um eine Schwenkachse (20) schwenkbares Betätigungselement (12, 14) ist

7. Fahrzeugsitz nach einem der vorangehenden Ansprüche,
**dadurch gekennzeichnet, dass**
das manuell betätigbare Betätigungselement (16, 18) mehrere, insbesondere vier, Betätigungsstellungen und eine Neutralstellung aufweist.

## Claims

1. Vehicle seat comprising a base frame, a seat frame which can be adjusted relative to the base frame and a pneumatic spring which acts between said base frame and said seat frame and is supported on the seat frame, at least one pressure source and at least one valve device (12, 14) which is in fluid communication with said pressure source being provided, and a manually operable operating element (16, 18) also being provided in order to adjust the vehicle seat, said at least one valve device (12, 14) being arranged on or in the operating element (16, 18), **characterised in that** an interface to the vehicle ignition is provided, by means of which interface a signal indicating the change from the "ignition off" state to the "ignition on" state can be transmitted, said signal triggering automatic height or weight control respectively.

2. Vehicle seat according to claim 1, **characterised in that** a seat height adjustment device is provided, by means of which the seat frame can be moved relative to the base frame in order to adjust the seat height.

3. Vehicle seat according to any of the preceding claims, **characterised in that** a device is provided for setting the gas pressure in the pneumatic spring in dependence of the weight of a person sitting in the vehicle seat.

4. Vehicle seat according to any of the preceding claims, **characterised in that** a microswitch (24, 26) is provided, it in particular being provided for said microswitch (24, 26) to be arranged on or in the operating element (16, 18).

5. Vehicle seat according to any of the preceding claims, **characterised in that** two valves (12, 14), in particular a 2/2 valve (12) and a 3/2 valve (14), are arranged on or in the operating element (16, 18).

6. Vehicle seat according to any of the preceding claims, **characterised in that** the manually operable operating element (12, 14) is an operating element (12, 14) which can pivot about a pivot axis (20) for the purpose of operation.

7. Vehicle seat according to any of the preceding claims, **characterised in that** the manually operable operating element (16, 18) has a plurality of, in particular four, operating positions and one neutral position.

## Revendications

1. Siège de véhicule, comportant un cadre de base, et un cadre d'assise relativement réglable par rapport au cadre de base, et comportant un ressort pneumatique, qui agit entre ledit cadre de base et ledit cadre d'assise et qui prend appui sur le cadre d'assise, au moins une source de pression et,
au moins un dispositif à vannes (12, 14) en liaison fluidique avec ladite source de pression étant prévus, étant prévu en outre un élément d'actionnement (16, 18) à actionner manuellement pour le réglage du siège de véhicule, ledit au moins un dispositif à vannes (12, 14) étant disposé en ou dans l'élément d'actionnement (16, 18), **caractérisé en ce qu'**il existe une interface pour l'allumage d'un véhicule, par l'intermédiaire de laquelle peut être transmis un signal qui indique un changement d'état entre « allumage inactif » et « allumage actif », ledit signal déclenchant une régulation automatique de niveau ou de poids respectivement.

2. Siège de véhicule selon la revendication 1, **caractérisé en ce qu'**il est prévu un dispositif de réglage de la hauteur du coussin, par lequel il est possible de régler le cadre d'assise par rapport au cadre de base pour le réglage de la hauteur du coussin.

3. Siège de véhicule selon l'une quelconque des revendications précédentes, **caractérisé en ce qu'**il est prévu un dispositif pour le réglage de la pression du gaz dans le ressort pneumatique en fonction du poids d'une personne assise sur le siège de véhicule.

4. Siège de véhicule selon l'une quelconque des revendications précédentes, **caractérisé en ce qu'**il est prévu un micro-interrupteur (24, 26), étant prévu en particulier que ledit micro-interrupteur (24, 26) est disposé sur ou dans l'élément d'actionnement (16, 18).

5. Siège de véhicule selon l'une quelconque des revendications précédentes, **caractérisé en ce que** sur ou dans l'élément d'actionnement (16, 18) sont disposées deux vannes (12, 14), en particulier une vanne à 2/2 voies (12) et une vanne à 3/2 voies (14).

6. Siège de véhicule selon l'une quelconque des revendications précédentes, **caractérisé en ce que** l'élément d'actionnement (16, 18) à actionner manuellement est un élément d'actionnement (16, 18) apte à pivoter autour d'un axe de pivotement (20) en vue de son actionnement.

7. Siège de véhicule selon l'une quelconque des revendications précédentes, **caractérisé en ce que** l'élément d'actionnement (16, 18) à actionner manuellement comporte plusieurs, en particulier quatre, positions d'actionnement et une position neutre.
